# EUROPÄISCHE PATENTSCHRIFT

(11) **EP 3 484 244 B1**
(45) Veröffentlichungstag und Bekanntmachung des Hinweises auf die Patenterteilung: **23.06.2021**
(21) Anmeldenummer: 18200600.7
(22) Anmeldetag: 16.10.2018
(51) Int. Cl.: H05B 6/12, H01F 1/00

(54) **INDUKTIONSGARGERÄTEVORRICHTUNG**
INDUCTION COOKING DEVICE
DISPOSITIF FORMANT APPAREIL DE CUISSON INDUCTIF

(30) Priorität: 14.11.2017 ES 201731323
(43) Veröffentlichungstag der Anmeldung: 15.05.2019
(73) Patentinhaber: BSH Hausgeräte GmbH, 81739 München (DE)
(72) Erfinder: Alonso Esteban, Rafael, 22004 Huesca (ES); Carretero Chamarro, Claudio, 50003 Zaragoza (ES); Hernandez Blasco, Pablo Jesus, 50019 Zaragoza (ES); Llorente Gil, Sergio, 50009 Zaragoza (ES); Lope Moratilla, Ignacio, 50010 Zaragoza (ES); Moya Albertin, Maria Elena, 50002 Zaragoza (ES); Villuendas Lopez, Francisco, 50009 Zaragoza (ES)

(56) Entgegenhaltungen:
- EP-A1- 3 171 369
- DE-A1- 3 808 756
- DE-A1-102006 038 370
- US-A- 5 686 006

## Beschreibung

Die Erfindung betrifft eine Induktionsgargerätevorrichtung nach dem Oberbegriff des Anspruchs 1.

Aus der deutschen Offenlegungsschrift DE 10 2008 038 370 A1 ist bereits eine Induktionsgargerätevorrichtung bekannt, welche einen Induktor und eine Trägereinheit für den Induktor aufweist. Die Trägereinheit ist aus einem Verbindungsmittel und aus einem Magnetflussbündelungselement hergestellt, welches aus einem Ferritpulver besteht. Eine Herstellung einer solchen Trägereinheit ist jedoch in einem Vergleich zu einer Herstellung einer Trägereinheit aus Plastik sehr aufwändig und kostenintensiv. Darüber hinaus ist eine derartig hergestellte Trägereinheit in einem Vergleich zu einer Trägereinheit aus Plastik relativ brüchig. Dadurch, dass als Magnetflussbündelungselement ausschließlich Ferritpulver verwendet wird, resultieren Einschränkungen hinsichtlich einer Beeinflussung von Eigenschaften einer Magnetflussbündelungseinheit bei der Herstellung, wie beispielsweise hinsichtlich einer Permeabilität und/oder einer Konsistenz. Das Dokument DE3808756 A1 offenbart eine Induktionsgargerätevorrichtung gemäß dem Oberbegriff vom Anspruch 1.

Die Aufgabe der Erfindung besteht insbesondere darin, eine gattungsgemäße Vorrichtung mit verbesserten Eigenschaften hinsichtlich einer Effizienz bereitzustellen. Die Aufgabe wird erfindungsgemäß durch die Merkmale der Ansprüche 1 und 11 gelöst, während vorteilhafte Ausgestaltungen und Weiterbildungen der Erfindung den Unteransprüchen entnommen werden können.

Die Erfindung geht aus von einer Induktionsgargerätevorrichtung, insbesondere von einer Induktionskochfeldvorrichtung, mit zumindest einem Induktor und mit zumindest einer insbesondere wenigstens im Wesentlichen starren Magnetflussbündelungseinheit, welche zu einer Bündelung zumindest eines durch den Induktor bereitgestellten magnetischen Flusses vorgesehen ist und welche zumindest ein Magnetflussbündelungselement aus einem magnetisierbaren Material und zumindest ein Verbindungsmittel aufweist.

Es wird vorgeschlagen, dass das Magnetflussbündelungselement wenigstens zu einem Großteil granulitartig ausgebildet ist.

Durch die erfindungsgemäße Ausgestaltung kann insbesondere eine hohe Effizienz erreicht werden, und zwar insbesondere hinsichtlich einer Beeinflussung von Eigenschaften der Magnetflussbündelungseinheit bei der Herstellung und/oder hinsichtlich einer Beheizung von Gargeschirr. Durch das granulitartig ausgebildete Magnetflussbündelungselement kann insbesondere eine hohe Flexibilität hinsichtlich einer Korngröße erzielt werden, und zwar insbesondere in einem Vergleich zu einem pulverartig ausgebildeten Magnetflussbündelungselement. Es kann insbesondere auf einen Sintervorgang bei einer Herstellung verzichtet werden, wodurch insbesondere eine kostengünstige Ausgestaltung ermöglicht werden kann, und zwar insbesondere in einem Vergleich zu einer durch Sintern hergestellten Magnetflussbündelungseinheit.

Unter einer "Induktionsgargerätevorrichtung", insbesondere unter einer "Induktionskochfeldvorrichtung", soll insbesondere zumindest ein Teil, insbesondere eine Unterbaugruppe, eines Induktionsgargeräts, insbesondere eines Induktionskochfelds, verstanden werden. Unter einem "Induktor" soll in diesem Zusammenhang insbesondere eine Einheit verstanden werden, welche dazu vorgesehen ist, in wenigstens einem Betriebszustand zumindest einem Gargeschirr Energie in Form eines insbesondere hochfrequenten elektromagnetischen Wechselfelds zum Zweck einer Beheizung des Gargeschirrs zuzuführen, wobei die dem Gargeschirr zugeführte Energie, insbesondere in dem Gargeschirr, in Wärme umgewandelt wird. Insbesondere stellt der Induktor in wenigstens einem Betriebszustand ein elektromagnetisches Wechselfeld mit einer Frequenz von mindestens 2 kHz, insbesondere von mindestens 5 kHz, vorteilhaft von mindestens 10 kHz, vorzugsweise von mindestens 15 kHz und besonders bevorzugt von mindestens 20 kHz bereit. Der Induktor stellt insbesondere in wenigstens einem Betriebszustand ein elektromagnetisches Wechselfeld mit einer Frequenz von maximal 100 kHz, insbesondere von maximal 95 kHz, vorteilhaft von maximal 90 kHz, besonders vorteilhaft von maximal 85 kHz und vorzugsweise von maximal 80 kHz bereit.

Insbesondere ist die Magnetflussbündelungseinheit dazu vorgesehen, eine Kopplung zwischen dem Induktor und zumindest einem aufgestellten Gargeschirr, welches in einer Einbaulage insbesondere wenigstens teilweise oberhalb des Induktors angeordnet ist, zu verbessern. Die Magnetflussbündelungseinheit ist insbesondere dazu vorgesehen, einen durch den Induktor bereitgestellten magnetischen Fluss insbesondere wesentlich zu verstärken und damit insbesondere in dem Gargeschirr, insbesondere in einem Gargeschirrboden des Gargeschirrs, induzierte Wärmeverluste zu verstärken und/oder zu erhöhen, und zwar insbesondere in einem Vergleich zu einer Ausgestaltung unter Vermeidung einer Magnetflussbündelungseinheit. Insbesondere ist die Magnetflussbündelungseinheit dazu vorgesehen, zumindest einen Ort, welcher in einer Einbaulage insbesondere unterhalb des Induktors und/oder auf einer dem Induktor abgewandten Seite der Magnetflussbündelungseinheit angeordnet ist, gegen einen durch den Induktor bereitgestellten magnetischen Fluss wenigstens teilweise abzuschirmen. Die Magnetflussbündelungseinheit ist insbesondere dazu vorgesehen, von dem Induktor bereitgestellte Streufelder zu minimieren.

Die Magnetflussbündelungseinheit ist insbesondere einstückig und vorteilhaft als ein zusammenhängender Körper ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Insbesondere kann die Magnetflussbündelungseinheit, insbesondere zusätzlich zu dem Magnetflussbündelungselement, zumindest ein weiteres Magnetflussbündelungselement aufweisen. Eine Herstellung der Magnetflussbündelungseinheit kann insbesondere unter Vermeidung eines Sintervorgangs erfolgen und/oder vorgenommen werden. Insbesondere kann die Magnetflussbündelungseinheit zumindest ein Magnetflussbündelungselement, welches insbesondere aus zumindest einem gesinterten magnetisierbaren Material bestehen könnte, und/oder zumindest ein weiteres Magnetflussbündelungselement aufweisen, welches insbesondere aus zumindest einem weiteren gesinterten magnetisierbaren Material bestehen könnte.

Die Magnetflussbündelungseinheit weist insbesondere eine Permeabilität von mindestens 10, insbesondere von mindestens 20, vorteilhaft von mindestens 50, besonders vorteilhaft von mindestens 100 und vorzugsweise von mindestens 200 auf. Insbesondere weist die Magnetflussbündelungseinheit eine Permeabilität von maximal 800, insbesondere von maximal 700, vorteilhaft von maximal 600, besonders vorteilhaft von maximal 500 und vorzugsweise von maximal 400 auf. Die Magnetflussbündelungseinheit besteht insbesondere zu einem Massenanteil und/oder Volumenanteil von maximal 99 %, insbesondere von maximal 98 %, vorteilhaft von maximal 97 %, besonders vorteilhaft von maximal 95 % und vorzugsweise von maximal 90 % aus dem Magnetflussbündelungselement und/oder aus dem weiteren Magnetflussbündelungselement. Insbesondere besteht die Magnetflussbündelungseinheit zu einem Massenanteil und/oder Volumenanteil von mindestens 60 %, insbesondere von mindestens 65 %, vorteilhaft von mindestens 70 %, besonders vorteilhaft von mindestens 75 % und vorzugsweise von mindestens 80 % aus dem Magnetflussbündelungselement und/oder aus dem weiteren Magnetflussbündelungselement.

Insbesondere weist die Induktionsgargerätevorrichtung zumindest eine Trägereinheit, insbesondere zumindest die Trägereinheit auf, welche in wenigstens einem montierten Zustand den Induktor trägt. Die Magnetflussbündelungseinheit weist insbesondere eine plattenartige und/oder scheibenartige Gestalt auf und erstreckt sich bei einer senkrechten Betrachtung auf eine Haupterstreckungsebene der Magnetflussbündelungseinheit und/oder der Trägereinheit über einen Flächenanteil von mindestens 50 %, insbesondere von mindestens 60 %, vorteilhaft von mindestens 70 %, vorzugsweise von mindestens 80 % und besonders bevorzugt von mindestens 90 % der Trägereinheit. Dadurch kann insbesondere eine dünne Magnetflussbündelungseinheit bereitgestellt und/oder eine kompakte Ausgestaltung erzielt werden. Es kann insbesondere eine hohe Effizienz, insbesondere hinsichtlich einer Beheizung von Gargeschirr, ermöglicht werden, und zwar insbesondere in einem Vergleich zu einer Magnetflussbündelungseinheit, welche durch Sintern hergestellt und/oder stabartig ausgebildet ist. Bei einer senkrechten Betrachtung auf eine Haupterstreckungsebene der Magnetflussbündelungseinheit und/oder der Trägereinheit sind die Magnetflussbündelungseinheit und die Trägereinheit insbesondere wenigstens zu einem Großteil überlappend angeordnet.

Alternativ oder zusätzlich, insbesondere zu der plattenartigen und/oder scheibenartigen Gestalt der Magnetflussbündelungseinheit, könnte die Magnetflussbündelungseinheit beispielsweise eine stabförmige und/oder kuchenstückförmige Gestalt aufweisen.

Unter einem "Magnetflussbündelungselement" soll insbesondere ein Element verstanden werden, welches ein Bestandteil der Magnetflussbündelungseinheit ist und welches insbesondere zumindest eine insbesondere magnetisierbare Eigenschaft der Magnetflussbündelungseinheit wenigstens teilweise definiert und/oder festlegt. Unter der Wendung, dass das Magnetflussbündelungselement zumindest eine Eigenschaft der Magnetflussbündelungseinheit "wenigstens teilweise" definiert und/oder festlegt, soll insbesondere verstanden werden, dass das Magnetflussbündelungselement die Eigenschaft der Magnetflussbündelungseinheit alleine und/oder gemeinsam mit zumindest einer weiteren Magnetflussbündelungseinheit definiert und/oder festlegt. Das Magnetflussbündelungselement und/oder das weitere Magnetflussbündelungselement der Magnetflussbündelungseinheit könnte insbesondere aus Alteisen und/oder aus Altmetall und/oder aus Abfall und/oder aus Schrott hergestellt sein.

Unter einem "Verbindungsmittel" soll insbesondere ein Mittel verstanden werden, welches in wenigstens einem montierten Zustand einzelne Bestandteile der Magnetflussbündelungseinheit, insbesondere das Magnetflussbündelungselement und/oder das weitere Magnetflussbündelungselement, vorteilhaft einzelne Körner des Magnetflussbündelungselements und/oder des weiteren Magnetflussbündelungselements, zusammenhält und/oder insbesondere stoffschlüssig miteinander verbindet. Beispielsweise könnte das Verbindungsmittel ein Harz, insbesondere ein Epoxidharz, und/oder ein Klebstoff sein und insbesondere wenigstens zu einem Großteil aus Harz, insbesondere aus Epoxidharz, und/oder aus Klebstoff bestehen. Vorzugsweise ist das Verbindungsmittel ein Zement, insbesondere ein hydraulischer Zement. Das Verbindungsmittel besteht insbesondere wenigstens zu einem Großteil aus Zement, insbesondere aus hydraulischem Zement. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden.

Unter der Wendung, dass das Magnetflussbündelungselement "granulatartig" ausgebildet ist, soll verstanden werden, dass das Magnetflussbündelungselement eine Korngröße von mindestens 1 mm, insbesondere von mindestens 1,5 mm, vorteilhaft von mindestens 2 mm und vorzugsweise von mindestens 2,5 mm aufweist und/oder dass das Magnetflussbündelungselement eine Korngröße von maximal 10 mm, insbesondere von maximal 9,5 mm, vorteilhaft von maximal 9 mm und vorzugsweise von maximal 8,5 mm aufweist. In wenigstens einem demontierten Zustand, in welchem insbesondere das Magnetflussbündelungselement einzeln vorliegt und in welchem insbesondere eine Vermischung mit dem Verbindungsmittel und/oder mit zumindest einem Bindemittel noch bevorsteht, ist das Magnetflussbündelungselement ein körniger und/oder schüttbarer Feststoff. Insbesondere beeinflusst das wenigstens zu einem Großteil granulatartig ausgebildete Magnetflussbündelungselement zumindest eine magnetisierbare Eigenschaft der Magnetflussbündelungseinheit wenigstens zu einem Großteil, und zwar insbesondere wesentlich mehr als ein wenigstens zu einem Großteil pulverartig ausgebildetes weiteres Magnetflussbündelungselement der Magnetflussbündelungseinheit.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einem weiteren Aspekt der Erfindung, welcher für sich alleine genommen oder gemeinsam mit anderen Aspekten der Erfindung betrachtet werden kann, wird vorgeschlagen, dass die Induktionsgargerätevorrichtung zumindest eine Trägereinheit aufweist, welche in wenigstens einem montierten Zustand den Induktor trägt und an welcher die Magnetflussbündelungseinheit befestigt ist. Unter einer "Trägereinheit" soll insbesondere eine Einheit verstanden werden, welche in wenigstens einem montierten Zustand eine Gewichtskraft des Induktors aufnimmt und/oder die Gewichtskraft an zumindest eine weitere Einheit weiterleitet. Die weitere Einheit könnte beispielsweise zumindest ein Abschirmelement und/oder zumindest eine Aufstellplatte und/oder zumindest eine Gehäuseeinheit sein. Insbesondere könnte die weitere Einheit Teil zumindest eines die Induktionsgargerätevorrichtung aufweisenden Induktionsgargeräts sein. Die Trägereinheit ist als ein Spulenträger ausgebildet. Insbesondere könnte die Trägereinheit zumindest eine Führungseinheit aufweisen, welche insbesondere zumindest eine Führungsstrecke definieren und/oder ausbilden könnte, entlang welcher insbesondere zumindest eine Heizleitung des Induktors geführt sein könnte. Alternativ oder zusätzlich könnte die Trägereinheit zumindest einen Spulenkern aufweisen, um welchen herum der Induktor insbesondere angeordnet und vorteilhaft zu einer Spule gewickelt sein könnte. Die Magnetflussbündelungseinheit ist in wenigstens einem montierten Zustand kraftschlüssig und/oder formschlüssig und/oder stoffschlüssig an der Trägereinheit befestigt. Insbesondere nimmt die Trägereinheit in wenigstens einem montierten Zustand zumindest eine Gewichtskraft der Magnetflussbündelungseinheit auf und/oder leitet die Gewichtskraft der Magnetflussbündelungseinheit an zumindest eine weitere Einheit weiter. Die Trägereinheit könnte beispielsweise wenigstens zu einem Großteil aus Plastik und/oder aus Keramik ausgebildet sein. Dadurch kann insbesondere eine Ausbildung und/oder Herstellung der Trägereinheit aus zumindest einem Magnetflussbündelungselement vermieden werden, wodurch insbesondere eine einfache und/oder kostengünstige Montage erreicht werden kann, und zwar insbesondere in einem Vergleich zu einer Ausgestaltung, bei welcher eine Trägereinheit aus dem Magnetflussbündelungselement hergestellt ist. Zudem wird vorgeschlagen, dass die Magnetflussbündelungseinheit zu einem Massenanteil und/oder Volumenanteil von maximal 40 %, insbesondere von maximal 35 %, vorteilhaft von maximal 30 %, besonders vorteilhaft von maximal 25 % und vorzugsweise von maximal 20 % aus dem Verbindungsmittel besteht. Insbesondere besteht die Magnetflussbündelungseinheit zu einem Massenanteil und/oder Volumenanteil von mindestens 1 %, insbesondere von mindestens 2 %, vorteilhaft von mindestens 3 %, besonders vorteilhaft von mindestens 5 % und vorzugsweise von mindestens 10 % aus dem Verbindungsmittel. Dadurch kann insbesondere eine hohe Stabilität bei insbesondere zeitgleich optimalen magnetisierbaren Eigenschaften erreicht werden.

Weiterhin wird vorgeschlagen, dass die Magnetflussbündelungseinheit zu einem Massenanteil und/oder Volumenanteil von maximal 60 %, insbesondere von maximal 55 %, vorteilhaft von maximal 50 %, besonders vorteilhaft von maximal 45 % und vorzugsweise von maximal 40 % aus dem Magnetflussbündelungselement besteht. Insbesondere besteht die Magnetflussbündelungseinheit zu einem Massenanteil und/oder Volumenanteil von mindestens 1 %, insbesondere von mindestens 2 %, vorteilhaft von mindestens 3 %, besonders vorteilhaft von mindestens 5 % und vorzugsweise von mindestens 10 % aus dem magnetisierbaren Material. Dadurch können insbesondere geringe Kosten erzielt werden, und zwar insbesondere in einem Vergleich zu einer Magnetflussbündelungseinheit, welche zu einem Großteil aus dem Magnetflussbündelungselement besteht.

Ferner wird vorgeschlagen, dass das Magnetflussbündelungselement und/oder das magnetisierbare Material eine Permeabilität von mindestens 100, insbesondere von mindestens 200, vorteilhaft von mindestens 500, besonders vorteilhaft von mindestens 1000 und vorzugsweise von mindestens 2000 aufweist. Insbesondere weist das Magnetflussbündelungselement und/oder das magnetisierbare Material eine Permeabilität von maximal 200000, insbesondere von maximal 100000, vorteilhaft von maximal 50000, besonders vorteilhaft von maximal 20000 und vorzugsweise von maximal 10000 auf. Dadurch kann insbesondere bereits bei einem geringeren Anteil des Magnetflussbündelungselements an einer Gesamtmasse und/oder an einem Gesamtvolumen der Magnetflussbündelungseinheit eine hohe Permeabilität der Magnetflussbündelungseinheit ermöglicht werden, wodurch insbesondere eine preisgünstige Ausgestaltung und/oder eine hohe Effizienz erreicht werden kann.

Die Magnetflussbündelungseinheit könnte beispielsweise ausschließlich das Magnetflussbündelungselement und das Verbindungsmittel aufweisen. Vorzugsweise weist die Magnetflussbündelungseinheit zumindest ein weiteres Magnetflussbündelungselement auf, welches wenigstens zu einem Großteil aus zumindest einem weiteren magnetisierbaren Material besteht und welches wenigstens zu einem Großteil pulverartig ausgebildet ist. Unter der Wendung, dass das weitere Magnetflussbündelungselement "pulverartig" ausgebildet ist, soll insbesondere verstanden werden, dass das weitere Magnetflussbündelungselement eine Korngröße von maximal 990 µm, insbesondere von maximal 950 µm, vorteilhaft von maximal 900 µm und vorzugsweise von maximal 850 µm aufweist und/oder dass das weitere Magnetflussbündelungselement eine Korngröße von mindestens 1 µm, insbesondere von mindestens 2 µm, vorteilhaft von mindestens 5 µm und vorzugsweise von mindestens 10 µm aufweist. Das Magnetflussbündelungselement und das weitere Magnetflussbündelungselement könnten beispielsweise wenigstens zu einem Großteil aus verschiedenen magnetisierbaren Materialien bestehen und/oder hergestellt sein. Alternativ oder zusätzlich könnten das Magnetflussbündelungselement und das weitere Magnetflussbündelungselement beispielsweise wenigstens zu einem Großteil aus dem gleichen magnetisierbaren Material bestehen und/oder hergestellt sein. Dadurch kann insbesondere eine hohe Flexibilität erreicht werden, da eine magnetisierbare Eigenschaft der Magnetflussbündelungseinheit insbesondere durch Variation eines Massenanteils und/oder Volumenanteils des Magnetflussbündelungselements und/oder des weiteren Magnetflussbündelungselements eingestellt und/oder beeinflusst werden kann.

Weiterhin wird vorgeschlagen, dass die Magnetflussbündelungseinheit zu einem Massenanteil und/oder Volumenanteil von maximal 95 %, insbesondere von maximal 90 %, vorteilhaft von maximal 80 %, besonders vorteilhaft von maximal 70 % und vorzugsweise von maximal 65 % aus dem weiteren Magnetflussbündelungselement besteht. Insbesondere besteht die Magnetflussbündelungseinheit zu einem Massenanteil und/oder Volumenanteil von mindestens 35 %, insbesondere von mindestens 30 %, vorteilhaft von mindestens 25 %, besonders vorteilhaft von mindestens 20 % und vorzugsweise von mindestens 15 % aus dem weiteren Magnetflussbündelungselement. Dadurch kann insbesondere eine hohe Effizienz erreicht werden, und zwar insbesondere hinsichtlich einer Beheizung von Gargeschirr.

Ferner wird vorgeschlagen, dass das weitere Magnetflussbündelungselement und/oder das weitere magnetisierbare Material eine Permeabilität von mindestens 4, insbesondere von mindestens 6, vorteilhaft von mindestens 15, besonders vorteilhaft von mindestens 20 und vorzugsweise von mindestens 30 aufweist. Insbesondere weist das Magnetflussbündelungselement und/oder das weitere magnetisierbare Material eine Permeabilität von maximal 500, insbesondere von maximal 300, vorteilhaft von maximal 200, besonders vorteilhaft von maximal 100 und vorzugsweise von maximal 80 auf. Dadurch kann insbesondere eine vorteilhafte Permeabilität der Magnetflussbündelungseinheit ermöglicht werden.

Beispielsweise könnten das magnetisierbare Material und/oder das weitere magnetisierbare Material zumindest eine nanokristalline Verbindung und/oder Eisen und/oder Sendust sein. Insbesondere könnte das Magnetflussbündelungselement und/oder das weitere Magnetflussbündelungselement wenigstens zu einem Großteil zumindest aus zumindest einer nanokristallinen Verbindung und/oder aus Eisen und/oder aus Sendust bestehen. Vorzugsweise ist das magnetisierbare Material und/oder insbesondere das weitere magnetisierbare Material ein Ferrit. Das Magnetflussbündelungselement und/oder das weitere Magnetflussbündelungselement besteht insbesondere wenigstens zu einem Großteil aus Ferriten, welche insbesondere ferromagnetische keramische Werkstoffe sind. Beispielsweise könnte in Abhängigkeit von einer gewünschten Eigenschaft der Magnetflussbündelungseinheit und/oder in Abhängigkeit von Betriebsbedingungen, wie insbesondere einer Frequenz eines von dem Induktor bereitgestellten magnetischen Flusses und/oder einer maximalen Intensität eines von dem Induktor bereitgestellten magnetischen Flusses, die Magnetflussbündelungseinheit wenigstens zu einem Großteil aus einem jeweils für den speziellen Einzelfall geeigneten Material ausgebildet sein. Unter "Ferriten" sollen insbesondere ferromagnetische und/oder ferrimagnetische keramische Werkstoffe verstanden werden. Dadurch kann insbesondere eine hohe Effizienz hinsichtlich einer Beheizung von Gargeschirr erreicht werden.

Eine besonders hohe Effizienz kann insbesondere erreicht werden durch ein Induktionsgargerät, insbesondere durch ein Induktionskochfeld, mit zumindest einer Induktionsgargerätevorrichtung.

Eine Effizienz kann insbesondere weiter gesteigert werden durch ein Verfahren zu einer Herstellung einer Induktionsgargerätevorrichtung, mit zumindest einem Induktor und mit zumindest einer insbesondere wenigstens im Wesentlichen starren Magnetflussbündelungseinheit, welche zu einer Bündelung zumindest eines durch den Induktor bereitgestellten magnetischen Flusses vorgesehen ist und welche aus zumindest einem Magnetflussbündelungselement aus einem magnetisierbaren Material und aus zumindest einem Bindemittel hergestellt wird, wobei die Magnetflussbündelungseinheit aus zumindest einem wenigstens zu einem Großteil granulatartigen ausgebildeten Magnetflussbündelungselement hergestellt wird. Insbesondere ist das Bindemittel eine Vorstufe des Verbindungsmittels. Das Bindemittel wird in dem Verfahren zu der Herstellung der Induktionsgargerätevorrichtung in das Verbindungsmittel überführt. Insbesondere weist das Bindemittel insbesondere zusätzlich zu einem Material, aus welchem das Verbindungsmittel wenigstens zu einem Großteil besteht, zumindest ein Fluid, wie insbesondere Wasser, auf. Das Fluid des Bindemittels verdampft insbesondere bei der Herstellung der Magnetflussbündelungseinheit, und zwar insbesondere im Zuge einer Verfestigung der Magnetflussbündelungseinheit. Insbesondere wird die Magnetflussbündelungseinheit bei der Herstellung der Magnetflussbündelungseinheit in wenigstens einem Verfahrensschritt verfestigt. Unter einer "Verfestigung" soll insbesondere eine Aushärtung und/oder eine Kristallisation verstanden werden. Beispielsweise könnte die Magnetflussbündelungseinheit zu der Verfestigung erhitzt werden. Alternativ oder zusätzlich könnte die Magnetflussbündelungseinheit zu der Verfestigung insbesondere eine bestimmte Zeitdauer, welche beispielsweise zumindest einen Tag, insbesondere zumindest zwei, vorteilhaft zumindest vier, besonders vorteilhaft zumindest sechs und vorzugsweise zumindest zehn Tage sein könnte, ruhen und in dieser Zeitdauer insbesondere einen Aggregatzustand der Magnetflussbündelungseinheit und/oder eine Gitterstruktur der Magnetflussbündelungseinheit verändern.

Die Induktionsgargerätevorrichtung soll hierbei nicht auf die oben beschriebene Anwendung und Ausführungsform beschränkt sein. Insbesondere kann die Induktionsgargerätevorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Induktionsgargerät mit mehreren Induktionsgargerätevorrichtungen in einer schematischen Draufsicht,
- Fig. 2: eine der Induktionsgargerätevorrichtungen aus Fig. 1 in einer schematischen Schnittdarstellung,
- Fig. 3: eine Induktionsgargerätevorrichtung eines alternativen Induktionsgargeräts in einer schematischen Schnittdarstellung,
- Fig. 4: eine Induktionsgargerätevorrichtung eines alternativen Induktionsgargeräts in einer schematischen Schnittdarstellung und
- Fig. 5: eine Induktionsgargerätevorrichtung eines alternativen Induktionsgargeräts in einer schematischen Schnittdarstellung.

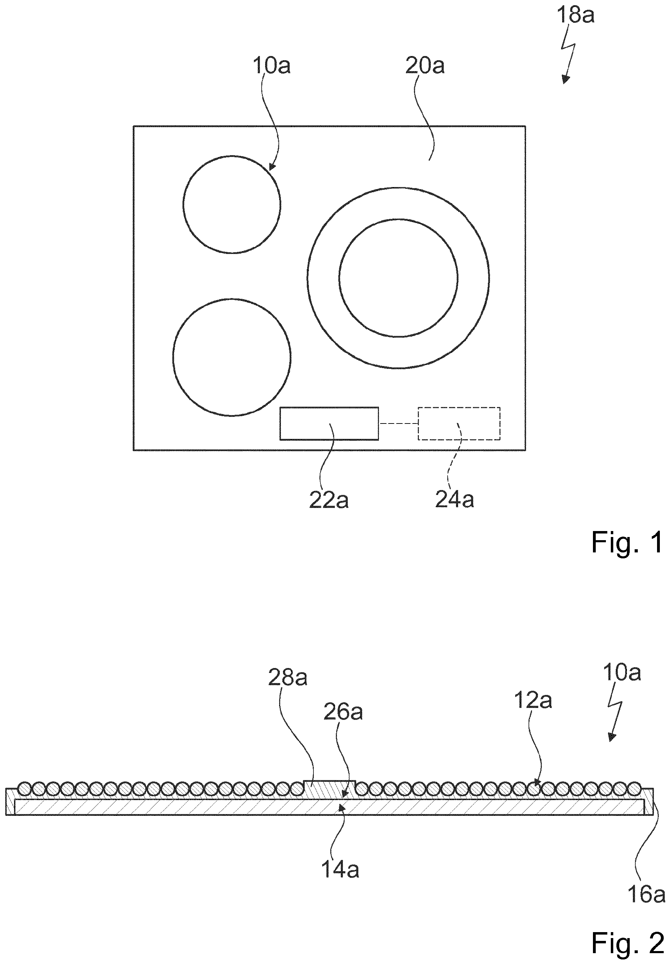

Fig. 1 zeigt ein Induktionsgargerät 18a, das als ein Induktionskochfeld ausgebildet ist, mit mehreren Induktionsgargerätevorrichtungen 10a, die jeweils als eine Induktionskochfeldvorrichtung ausgebildet sind. Von mehrfach vorhandenen Objekten ist in den Figuren jeweils lediglich eines mit einem Bezugszeichen versehen.

Im vorliegenden Ausführungsbeispiel weist das Induktionsgargerät 18a drei Induktionsgargerätevorrichtungen 10a auf. Alternativ könnte das Induktionsgargerät 18a eine andere Anzahl an Induktionsgargerätevorrichtungen 10a aufweisen. Beispielsweise könnte das Induktionsgargerät 18a eine größere Anzahl an Induktionsgargerätevorrichtungen 10a aufweisen, und zwar insbesondere zumindest vier, vorteilhaft zumindest sechs, vorzugsweise zumindest acht und besonders bevorzugt eine Vielzahl an Induktionsgargerätevorrichtungen 10a. Das Induktionsgargerät 18a könnte beispielsweise eine kleinere Anzahl an Induktionsgargerätevorrichtungen 10a aufweisen, und zwar insbesondere zumindest eine und vorteilhaft zumindest zwei Induktionsgargerätevorrichtungen 10a. Im Folgenden wird jedoch lediglich eine der Induktionsgargerätevorrichtungen 10a beschrieben.

Das Induktionsgargerät 18a weist eine Aufstellplatte 20a auf. Die Aufstellplatte 20a ist im vorliegenden Ausführungsbeispiel als eine Kochfeldplatte ausgebildet. In einem montierten Zustand bildet die Aufstellplatte 20a einen Teil eines Geräteaußengehäuses aus, und zwar insbesondere eines Geräteaußengehäuses insbesondere des Induktionsgargeräts 18a. Die Aufstellplatte 20a ist zu einem Aufstellen von Gargeschirr vorgesehen (nicht dargestellt).

In einer Einbaulage ist die Induktionsgargerätevorrichtung 10a unterhalb der Aufstellplatte 20a angeordnet. Die Induktionsgargerätevorrichtung 10a ist dazu vorgesehen, auf der Aufstellplatte 20a oberhalb der Induktionsgargerätevorrichtung 10a aufgestelltes Gargeschirr zu erhitzen.

Das Induktionsgargerät 18a weist eine Bedienerschnittstelle 22a zu einer Eingabe und/oder Auswahl von Betriebsparametern auf, beispielsweise einer Heizleistung und/oder einer Heizleistungsdichte und/oder einer Heizzone. Die Bedienerschnittstelle 22a ist zu einer Ausgabe eines Werts eines Betriebsparameters an einen Bediener vorgesehen.

Das Induktionsgargerät 18a weist eine Steuereinheit 24a auf. Die Steuereinheit 24a ist dazu vorgesehen, in Abhängigkeit von mittels der Bedienerschnittstelle 22a eingegebener Betriebsparameter Aktionen auszuführen und/oder Einstellungen zu verändern. Die Steuereinheit 24a regelt in einem Betriebszustand eine Energiezufuhr zu der Induktionsgargerätevorrichtung 10a.

In einem Betriebszustand beheizt die Induktionsgargerätevorrichtung 10a aufgestelltes Gargeschirr. Zu einer Beheizung von aufgestelltem Gargeschirr weist die Induktionsgargerätevorrichtung 10a einen Induktor 12a auf (vgl. Fig. 2). In einem Betriebszustand stellt der Induktor 12a ein elektromagnetisches Wechselfeld zu einer Beheizung von aufgestelltem Gargeschirr bereit.

Die Induktionsgargerätevorrichtung 10a weist eine Trägereinheit 16a auf. In einem montierten Zustand trägt die Trägereinheit 16a den Induktor 12a. Die Trägereinheit 16a ist als ein Spulenträger ausgebildet. Der Induktor 12a ist in einem montierten Zustand auf der Trägereinheit 16a zu einer Spule gewickelt. Im vorliegenden Ausführungsbeispiel besteht die Trägereinheit 16a zu einem Großteil aus Plastik.

Die Trägereinheit 16a weist einen Spulenkern 28a auf. In einem montierten Zustand ist der Induktor 12a um den Spulenkern 28a herum angeordnet. Im vorliegenden Ausführungsbeispiel ist der Induktor 12a dichtgewickelt um den Spulenkern 28a herum angeordnet.

Die Induktionsgargerätevorrichtung 10a weist eine Magnetflussbündelungseinheit 14a auf. In einem montierten Zustand ist die Magnetflussbündelungseinheit 14a zu einem Großteil auf einer dem Gargeschirr abgewandten Seite des Induktors 12a angeordnet. Die Magnetflussbündelungseinheit 14a ist zu einer Bündelung eines durch den Induktor 12a bereitgestellten magnetischen Flusses vorgesehen.

In einem montierten Zustand ist die Magnetflussbündelungseinheit 14a an der Trägereinheit 16a befestigt. Die Magnetflussbündelungseinheit 14a ist in einem montierten Zustand an einer Unterseite der Trägereinheit 16a befestigt. Im vorliegenden Ausführungsbeispiel weist die Trägereinheit 16a einen Aufnahmebereich 26a auf, welcher zu einer Aufnahme der Magnetflussbündelungseinheit 14a vorgesehen ist. In einem montierten Zustand ist die Magnetflussbündelungseinheit 14a zu einem Großteil in dem Aufnahmebereich 26a angeordnet.

Die Magnetflussbündelungseinheit 14a weist ein Magnetflussbündelungselement aus einem magnetisierbaren Material auf. Im vorliegenden Ausführungsbeispiel ist das magnetisierbare Material ein Ferrit.

Im vorliegenden Ausführungsbeispiel besteht die Magnetflussbündelungseinheit 14a zu einem Massenanteil und/oder Volumenanteil von im Wesentlichen 30 % aus dem Magnetflussbündelungselement. Das Magnetflussbündelungselement ist zu einem Großteil granulatartig ausgebildet. Eine Korngröße des Magnetflussbündelungselements liegt im Bereich von 1 mm bis 10 mm. Das Magnetflussbündelungselement weist eine Permeabilität von im Wesentlichen 100000 auf.

Die Magnetflussbündelungseinheit 14a weist ein Verbindungsmittel auf. Im vorliegenden Ausführungsbeispiel ist das Verbindungsmittel Zement. Das Verbindungsmittel wird aus einem Bindemittel und Wasser hergestellt. Im vorliegenden Ausführungsbeispiel besteht die Magnetflussbündelungseinheit 14a zu einem Massenanteil und/oder Volumenanteil von im Wesentlichen 20 % aus dem Verbindungsmittel.

Neben dem Verbindungsmittel und dem Magnetflussbündelungselement weist die Magnetflussbündelungseinheit 14a ein weiteres Magnetflussbündelungselement auf. Das weitere Magnetflussbündelungselement besteht zu einem Großteil aus einem weiteren magnetisierbaren Material. Das weitere Magnetflussbündelungselement weist eine Permeabilität von im Wesentlichen 100 auf.

Das weitere Magnetflussbündelungselement ist zu einem Großteil pulverartig ausgebildet. Eine Korngröße des weiteren Magnetflussbündelungselements liegt im Bereich von 1 µm bis 990 µm. Die Magnetflussbündelungseinheit 14a besteht im vorliegenden Ausführungsbeispiel zu einem Massenanteil und/oder Volumenanteil von im Wesentlichen 50 % aus dem weiteren Magnetflussbündelungselement. Im vorliegenden Ausführungsbeispiel ist das weitere magnetisierbare Material ein Ferrit.

In einem Verfahren zu einer Herstellung der Induktionsgargerätevorrichtung 10a wird die Magnetflussbündelungseinheit 14a aus dem Magnetflussbündelungselement aus dem magnetisierbaren Material, aus dem weiteren magnetisierbaren Material, aus Wasser und aus dem Bindemittel hergestellt. Die Magnetflussbündelungseinheit 14a wird teilweise aus dem zu einem Großteil granulatartigen ausgebildeten Magnetflussbündelungselement hergestellt. Die Magnetflussbündelungseinheit 14a wird teilweise aus dem zu einem Großteil pulverartigen ausgebildeten weiteren Magnetflussbündelungselement hergestellt. Das Verbindungsmittel der Magnetflussbündelungseinheit 14a wird durch Aushärtung hergestellt. Das Verbindungsmittel wird aus dem Wasser und dem Bindemittel hergestellt.

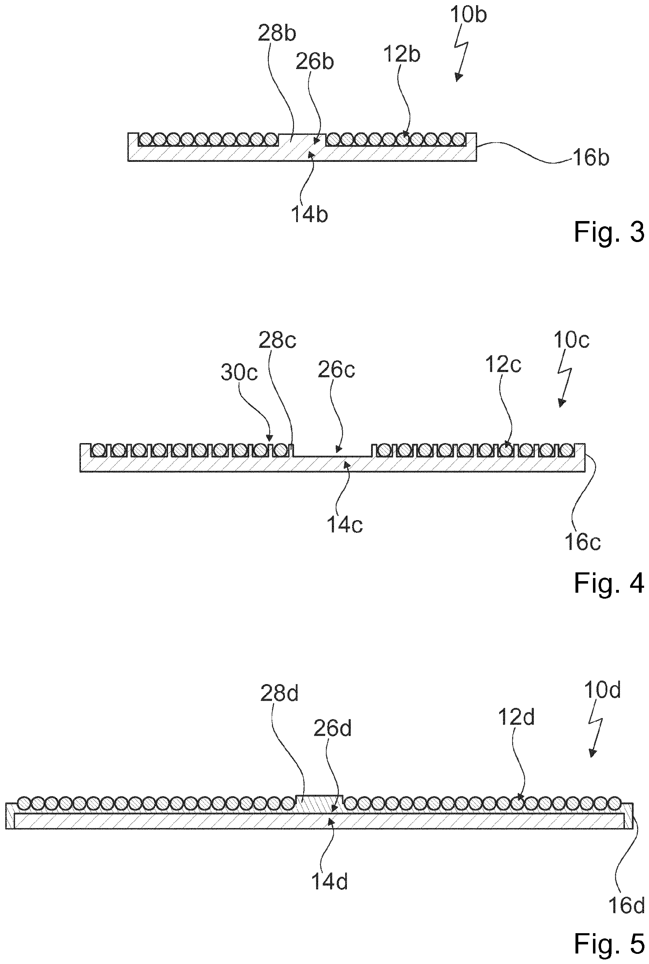

In Fig. 3 bis 5 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 und 2 verwiesen werden kann. Zur Unterscheidung der Ausführungsbeispiele ist der Buchstabe a in den Bezugszeichen des Ausführungsbeispiels in den Fig. 1 und 2 durch die Buchstaben b bis d in den Bezugszeichen des Ausführungsbeispiels der Fig. 3 bis 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 und 2 verwiesen werden.

Fig. 3 zeigt eine Induktionsgargerätevorrichtung 10b eines alternativen Induktionsgargeräts 18b. Die Induktionsgargerätevorrichtung 10b weist eine Trägereinheit 16b auf, welche in einem montierten Zustand einen Induktor 12b der Induktionsgargerätevorrichtung 10b trägt. Eine Magnetflussbündelungseinheit 14b der Induktionsgargerätevorrichtung 10b ist im vorliegenden Ausführungsbeispiel einstückig mit der Trägereinheit 16b ausgebildet.

Die Magnetflussbündelungseinheit 14b und damit insbesondere die Trägereinheit 16b weist ein Magnetflussbündelungselement aus einem magnetisierbaren Material und ein Verbindungsmittel auf. Das Magnetflussbündelungselement ist zu einem Großteil granulatartig ausgebildet.

Neben dem Verbindungsmittel und dem Magnetflussbündelungselement weist die Magnetflussbündelungseinheit 14b ein weiteres Magnetflussbündelungselement auf, welches zu einem Großteil aus einem weiteren magnetisierbaren Material besteht. Das weitere Magnetflussbündelungselement ist zu einem Großteil pulverartig ausgebildet.

Die Trägereinheit 16b weist einen Spulenkern 28b auf. In einem montierten Zustand ist der Induktor 12b um den Spulenkern 28b herum angeordnet. Im vorliegenden Ausführungsbeispiel ist der Induktor 12b dichtgewickelt um den Spulenkern 28b herum angeordnet.

Fig. 4 zeigt eine Induktionsgargerätevorrichtung 10c eines alternativen Induktionsgargeräts 18c. Die Induktionsgargerätevorrichtung 10c weist eine Trägereinheit 16c auf, welche in einem montierten Zustand einen Induktor 12c der Induktionsgargerätevorrichtung 10c trägt. Eine Magnetflussbündelungseinheit 14c der Induktionsgargerätevorrichtung 10c ist im vorliegenden Ausführungsbeispiel einstückig mit der Trägereinheit 16c ausgebildet.

Die Magnetflussbündelungseinheit 14c, und damit insbesondere die Trägereinheit 16c, weist ein Magnetflussbündelungselement aus einem magnetisierbaren Material und ein Verbindungsmittel auf. Das Magnetflussbündelungselement ist zu einem Großteil granulatartig ausgebildet.

Neben dem Verbindungsmittel und dem Magnetflussbündelungselement weist die Magnetflussbündelungseinheit 14c ein weiteres Magnetflussbündelungselement auf, welches zu einem Großteil aus einem weiteren magnetisierbaren Material besteht. Das weitere Magnetflussbündelungselement ist zu einem Großteil pulverartig ausgebildet.

Die Trägereinheit 16c weist einen Spulenkern 28c auf. In einem montierten Zustand ist der Induktor 12c um den Spulenkern 28c herum angeordnet. Im vorliegenden Ausführungsbeispiel ist der Induktor 12c beabstandet gewickelt um den Spulenkern 28c herum angeordnet.

Die Trägereinheit 16c weist eine Führungseinheit 30c auf. Die Führungseinheit 30c definiert eine Führungsstrecke, entlang welcher eine Heizleitung des Induktors 12c geführt ist. Die Heizleitung des Induktors 12c ist in einem montierten Zustand entlang der Führungsstrecke zu einer Spule gewickelt. Die Führungseinheit 30c definiert einen Abstand zwischen benachbarten Windungen des beabstandet gewickelten Induktors 12c.

Fig. 5 zeigt eine Induktionsgargerätevorrichtung 10d eines alternativen Induktionsgargeräts 18d. Die Induktionsgargerätevorrichtung 10d weist eine Trägereinheit 16d auf, welche in einem montierten Zustand einen Induktor 12d der Induktionsgargerätevorrichtung 10d trägt. Eine Magnetflussbündelungseinheit 14d der Induktionsgargerätevorrichtung 10d ist in einem montierten Zustand an der Trägereinheit 16d befestigt.

Die Magnetflussbündelungseinheit 14d weist ein weiteres Magnetflussbündelungselement aus einem weiteren magnetisierbaren Material und ein Verbindungsmittel auf. Das weitere Magnetflussbündelungselement ist zu einem Großteil pulverartig ausgebildet. Auf ein zu einem Großteil granulatartig ausgebildetes Magnetflussbündelungselement aus einem magnetisierbaren Material kann in diesem Ausführungsbeispiel verzichtet werden.

### BEZUGSZEICHEN

- 10: Induktionsgargerätevorrichtung
- 12: Induktor
- 14: Magnetflussbündelungseinheit
- 16: Trägereinheit
- 18: Induktionsgargerät
- 20: Aufstellplatte
- 22: Bedienerschnittstelle
- 24: Steuereinheit
- 26: Aufnahmebereich
- 28: Spulenkern
- 30: Führungseinheit

## Patentansprüche

1. Induktionsgargerätevorrichtung, insbesondere Induktionskochfeldvorrichtung, mit zumindest einem Induktor (12a-d) und mit zumindest einer Magnetflussbündelungseinheit (14a-d), welche zu einer Bündelung zumindest eines durch den Induktor (12a-d) bereitgestellten magnetischen Flusses vorgesehen ist und welche zumindest ein Magnetflussbündelungselement aus einem magnetisierbaren Material und zumindest ein Verbindungsmittel aufweist, wobei das Magnetflussbündelungselement wenigstens zu einem Großteil granulatartig ausgebildet ist, wobei das Magnetflussbündelungselement eine Korngröße von mindestens 1 mm aufweist, **gekennzeichnet durch** zumindest eine Trägereinheit (16a; 16d), welche in wenigstens einem montierten Zustand den Induktor (12a; 12d) trägt und an welcher die Magnetflussbündelungseinheit (14a; 14d) befestigt ist.

2. Induktionsgargerätevorrichtung nach Anspruch 1, **dadurch gekennzeichnet, dass** die Magnetflussbündelungseinheit (14a-d) zu einem Massenanteil und/oder Volumenanteil von maximal 40 % aus dem Verbindungsmittel besteht.

3. Induktionsgargerätevorrichtung nach einem der vorhergehenden Ansprüche, **dadurch gekennzeichnet, dass** die Magnetflussbündelungseinheit (14a-d) zu einem Massenanteil und/oder Volumenanteil von maximal 60 % aus dem Magnetflussbündelungselement besteht.

4. Induktionsgargerätevorrichtung nach einem der vorhergehenden Ansprüche, **dadurch gekennzeichnet, dass** das Magnetflussbündelungselement eine Permeabilität von mindestens 100 aufweist.

5. Induktionsgargerätevorrichtung nach einem der vorhergehenden Ansprüche, **dadurch gekennzeichnet, dass** die Magnetflussbündelungseinheit (14a-d) zumindest ein weiteres Magnetflussbündelungselement aufweist, welches wenigstens zu einem Großteil aus zumindest einem weiteren magnetisierbaren Material besteht und welches wenigstens zu einem Großteil pulverartig ausgebildet ist.

6. Induktionsgargerätevorrichtung nach Anspruch 5, **dadurch gekennzeichnet, dass** die Magnetflussbündelungseinheit (14a-d) zu einem Massenanteil und/oder Volumenanteil von maximal 95 % aus dem weiteren Magnetflussbündelungselement besteht.

7. Induktionsgargerätevorrichtung nach Anspruch 5 oder 6, **dadurch gekennzeichnet, dass** das weitere Magnetflussbündelungselement eine Permeabilität von mindestens 4 aufweist.

8. Induktionsgargerätevorrichtung nach einem der vorhergehenden Ansprüche, **dadurch gekennzeichnet, dass** das magnetisierbare Material ein Ferrit ist.

9. Induktionsgargerät, insbesondere Induktionskochfeld, mit zumindest einer Induktionsgargerätevorrichtung (10a-d) nach einem der vorhergehenden Ansprüche.

## Claims

1. Induction cooking appliance device, in particular induction hob device, having at least one inductor (12a-d) and having at least one magnetic flux bundling unit (14a-d), which is provided to bundle at least one magnetic flux provided by the inductor (12a-d) and which has at least one magnetic flux bundling element made from a magnetisable material and at least one connection means, wherein the magnetic flux bundling element is embodied at least to a large extent in granular form, wherein the magnetic flux bundling element has a grain size of at least 1 mm, **characterised by** at least one carrier unit (16a; 16d), which, in at least one assembled state, carries the inductor (12a; 12d) and on which the magnetic flux bundling unit (14a; 14d) is fastened.

2. Induction cooking appliance device according to claim 1, **characterised in that** the magnetic flux bundling unit (14a-d) consists up to a percentage by weight and percentage by volume of at most 40% of the connection means.

3. Induction cooking appliance device according to one of the preceding claims, **characterised in that** the magnetic flux bundling unit (14a-d) consists up to a percentage by weight and/or percentage by volume of at most 60% of the magnetic flux bundling element.

4. Induction cooking appliance device according to one of the preceding claims, **characterised in that** the magnetic flux bundling element has a permeability of at least 100.

5. Induction cooking appliance device according to one of the preceding claims, **characterised in that** the magnetic flux bundling unit (14a-d) has at least one further magnetic flux bundling element, which consists at least to a large extent of at least one further magnetisable material and which is embodied at least to a large extent in powder form.

6. Induction cooking appliance device according to claim 5, **characterised in that** the magnetic flux bundling unit (14a-d) consists up to a percentage by weight and/or percentage by volume of at most 95% of the further magnetic flux bundling element.

7. Induction cooking appliance device according to claim 5 or 6, **characterised in that** the further magnetic flux bundling element has a permeability of at least 4.

8. Induction cooking appliance device according to one of the preceding claims, **characterised in that** the magnetisable material is a ferrite.

9. Induction cooking appliance, in particular induction hob, with at least one induction cooking appliance device (10a-d) according to one of the preceding claims.

## Revendications

1. Dispositif d'appareil de cuisson à induction, en particulier dispositif de champ de cuisson à indiction, avec au moins un inducteur (12a-d) et avec au moins une unité de concentration de flux magnétique (14a-d), prévue pour une concentration d'au moins un flux magnétique mis à disposition par l'inducteur (12a-d) et qui présente au moins un élément de concentration de flux magnétique en un matériau magnétisable et au moins un moyen de liaison, dans lequel l'élément de concentration de flux magnétique est au moins en majeure partie formé sous forme granuleuse, dans lequel l'élément de concentration de flux magnétique présente une taille de grains d'au moins 1 mm, **caractérisé par** au moins une unité de support (16a ; 16d), qui supporte l'inducteur (12a ; 12d) dans au moins un état monté et sur laquelle l'unité de concentration de flux magnétique (14a ; 14d) est fixée.

2. Dispositif d'appareil de cuisson à induction selon la revendication 1, **caractérisé en ce que** l'unité de concentration de flux magnétique (14a-d) se compose du moyen de liaison selon une proportion massique et/ou une proportion volumique maximale de 40 %.

3. Dispositif d'appareil de cuisson à induction selon l'une des revendications précédentes, **caractérisé en ce que** l'unité de concentration de flux magnétique (14a-d) se compose de l'élément de concentration de flux magnétique selon une proportion massique et/ou une proportion volumique maximale de 60 %.

4. Dispositif d'appareil de cuisson à induction selon l'une des revendications précédentes, **caractérisé en ce que** l'élément de concentration de flux magnétique présente une perméabilité d'au moins 100.

5. Dispositif d'appareil de cuisson à induction selon l'une des revendications précédentes, **caractérisé en ce que** l'unité de concentration de flux magnétique (14a-d) présente au moins un élément de concentration de flux magnétique supplémentaire, lequel se compose au moins en majeure partie d'au moins un matériau magnétisable supplémentaire et au moins en majeure partie formé sous forme pulvérulente.

6. Dispositif d'appareil de cuisson à induction selon la revendication 5, **caractérisé en ce que** l'unité de concentration de flux magnétique (14a-d) se compose de l'élément de concentration de flux magnétique supplémentaire selon une proportion massique et/ou une proportion volumique maximale de 95 %.

7. Dispositif d'appareil de cuisson à induction selon la revendication 5 ou 6, **caractérisé en ce que** l'élément de concentration de flux magnétique supplémentaire présente une perméabilité d'au moins 4.

8. Dispositif d'appareil de cuisson à induction selon l'une des revendications précédentes, **caractérisé en ce que** le matériau magnétisable est une ferrite.

9. Appareil de cuisson à induction, en particulier champ de cuisson à induction, avec au moins un dispositif d'appareil de cuisson à induction (10a-d) selon l'une des revendications précédentes.
